**Europäisches Patentamt**

**European Patent Office**

**Office européen des brevets**

(19)

(11) Numéro de publication: **0 155 206**
**A1**

## (12) DEMANDE DE BREVET EUROPEEN

(21) Numéro de dépôt: **85400289.6**

(22) Date de dépôt: **19.02.85**

(51) Int. Cl.⁴: **A 61 C 1/16**

(30) Priorité: **22.02.84 FR 8402679**

(71) Demandeur: **Labarde, Bernard,**
**F-87330 Mezières-sur-Issoire Haute-Vienne (FR)**

(43) Date de publication de la demande: **18.09.85**
**Bulletin 85/38**

(72) Inventeur: **Labarde, Bernard,**
**F-87330 Mezières-sur-Issoire Haute-Vienne (FR)**

(84) Etats contractants désignés: **AT BE CH DE FR GB IT LI LU NL SE**

(74) Mandataire: **Chevallier, Robert Marie Georges, Cabinet BOETTCHER 23, rue La Boétie, F-75008 Paris (FR)**

(54) **Dispositif de protection des tissus se montant sur les têtes de fraisage dentaires.**

(57) Dispositif de protection des tissus se montant sur les têtes de fraisage dentaires.

Un moyen de montage (1') sur une tête de fraisage dentaire porte un corps (2') déplaçable en rotation autour d'un axe longitudinal confondu avec celui de la fraise en position d'utilisation et ce corps (2') porte un logement (3') pour une tige (6) réunie par l'intermédiaire d'une charnière (7) à une palette protectrice (4).

EP 0 155 206 A1

ACTORUM AG

1    0155206

Dispositif de protection des tissus se montant sur les têtes de fraisage dentaires.

L'invention a pour objet un dispositif de protection des tissus mous à l'intérieur de la bouche pendant l'exécution de travaux dentaires à l'aide d'une fraise, ou d'un outil similaire, entraînée en rotation à vitesse convenable, par exemple par une turbine à air.

On connaît par le document FR-B-2 228 463 un dispositif de ce type destiné à être monté sur le coude de la poignée d'une turbine de fraisage dentaire et comprenant, d'une part un crochet de fixation, d'autre part une paroi protectrice. Celle-ci est pivotante par rapport au crochet de fixation autour d'un axe géométrique qui est parallèle à l'axe de la fraise en position d'utilisation. Pendant le fraisage d'une dent il est nécessaire de travailler sur les deux côtés libres d'une dent, c'est-à-dire du côté de la joue et du côté de la langue; il est nécessaire de travailler aussi sur ses côtés proches des dents voisines. Dans ce cas, le dispositif connu bute contre les dents voisines; il est nécessaire de le retirer pour travailler entre deux dents avec la fraise. Il est même apparu que ce protecteur connu est utilisable, du côté lingual d'une dent, seulement pour fraiser la zone centrale de cette dent parce que, en raison de sa largeur, la paroi protectrice rencontre la dent voisine bien avant que la fraise arrive à proximité de cette dent voisine.

L'invention a pour but principal de parvenir à un dispositif de protection du type défini ci-dessus qui assure la protection des tissus mous, qui permet de fraiser la totalité d'un côté d'une dent, à partir d'un point de cette dent proche d'une dent voisine jusqu'au point opposé proche de l'autre dent voisine de la dent travaillée.

Dans un dispositif de protection muni d'un moyen de montage sur une tête de fraisage dentaire et d'une palette protectrice, selon l'invention, la palette protectrice com-

prend une partie dite fixe et une partie dite basculante, cette dernière étant réunie à la première par une charnière disposée transversalement dans l'ensemble à la dimension longitudinale de cette palette qui est parallèle à la fraise en position de mortage sur la tête de fraisage.

Conformément à une seconde caractéristique de l'invention, la partie dite fixe de la palette est réunie au moyen de montage par l'intermédiaire d'un corps; ce corps est pourvu avantageusement d'un logement cylindrique ayant un axe général parallèle à l'axe de la fraise en position d'utilisation et la partie dite fixe de la palette est munie d'une tige apte à être logée dans ce logement.

Selon un premier aspect de l'invention, le corps est fixe par rapport au moyen de montage; la tige est cylindrique et elle est enfoncée avec frottement dans le logement correspondant avec une possibilité de rotation autour de l'axe général de ce logement.

Selon un second aspect de l'invention, le corps est monté mobile en rotation par rapport au moyen de montage autour d'un axe géométrique qui est confondu avec l'axe général de la fraise en position d'utilisation.

Dans un mode préféré de réalisation de l'invention, la charnière qui réunit la partie dite fixe et la partie dite basculante de la palette comprend une butée d'arrêt du pivotement dans une direction et un ressort de rappel de pivotement dans l'autre direction.

La palette protectrice a au moins une de ses faces principales qui est polie comme un miroir.

On donnera maintenant, sans intention limitative et sans exclure aucune variante, une description d'un mode préféré de réalisation. On se reportera au dessin annexé dans lequel :

- la figure 1 est une vue de face d'un dispositif de protection selon l'invention ,

- la figure 2 est une vue analogue à la figure 1

montrant le dispositif monté sur une tête de fraisage dentaire,

        - la figure 3 est une vue de côté du même dispositif,

        - la figure 4 est une vue partielle agrandie montrant la charnière d'articulation prévue sur la palette protectrice,

        - la figure 5 est un dessin schématique de plusieurs dents permettant d'apprécier l'avantage apporté par l'invention,

        - la figure 6 est une vue en élévation d'une variante de réalisation du dispositif de l'invention représenté en partie en coupe prêt à être monté sur une tête de fraisage dentaire dessinée en trait fin ,

        - la figure 7 est une vue de dessus du dispositif de la figure 6.

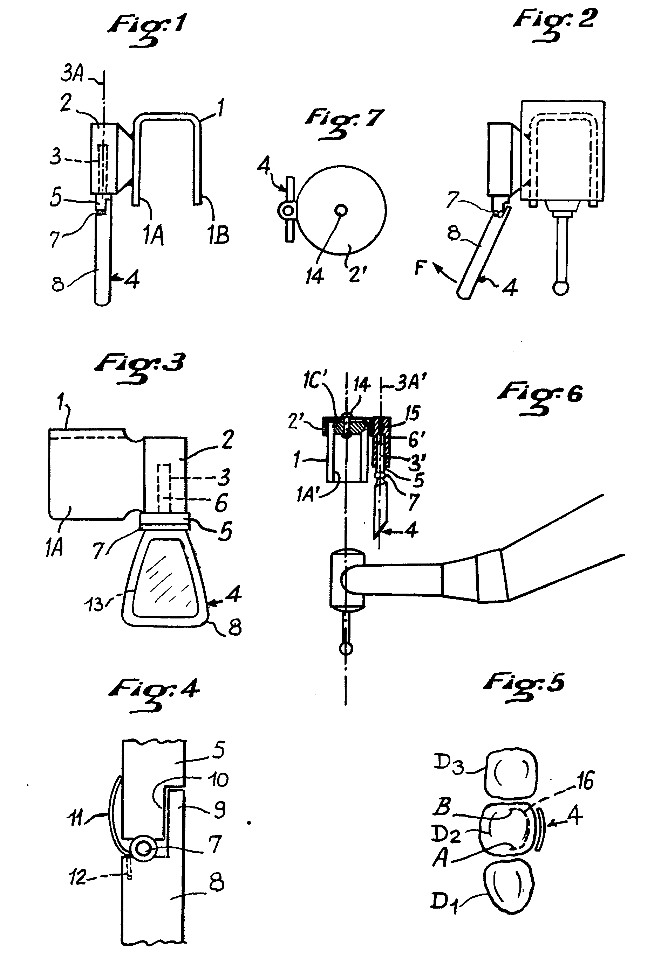

        Dans l'exemple de réalisation des figures 1 à 3 le moyen de montage est un étrier 1 à deux branches parallèles 1A, 1B. Cet étrier 1 se glisse sur une tête de fraisage dentaire, comme le montre la figure 2.

        Dans l'ensemble de réalisation des figures 6, 7 le moyen de montage est un chapeau 1' qui a une ouverture latérale 1A'; ce chapeau 1' s'enfile sur une tête de fraisage dentaire, comme le montre la figure 6.

        Dans l'exemple des figures 1 à 3, la face extérieure d'une branche 1A est munie d'un corps fixe 2 qui s'étend latéralement pour arriver jusqu'à proximité de la tête de fraisage. Dans ce corps 2 est prévu un logement cylindrique 3 ayant un axe général 3A qui est parallèle à l'axe général de la fraise en position d'utilisation.

        Le logement cylindrique 3 sert au montage d'une palette protectrice 4 comprenant une partie 5 dite partie fixe munie d'une tige cylindrique 6. Cette dernière est conçue pour être enfoncée avec frottement dans le logement 3 tout en permettant d'orienter la palette 4 par rotation forcée de la tige 6 dans le logement 3 autour de l'axe

général 3A.

Dans l'exemple des figures 6,7 le moyen de montage est un chapeau 1' qui est muni sur sa face extrême 1C' d'un corps tournant 2' qui s'étend latéralement sur le côté du chapeau 1' et où il présente un logement 3' qui a un axe général 3A'. Cet axe 3A' est parallèle à l'axe général de la fraise quand le chapeau 1' est monté sur une tête de fraisage dentaire. Ce logement 3' est destiné au montage de la palette protectrice 4. Celle-ci est réalisée exactement comme on l'a décrite en référence aux figures 1 à 3 ; elle a aussi une partie 5 dite partie fixe munie d'une tige 6. Cette dernière est montée dans le logement 3' avec une possibilité de coulissement en sens axial contre la force d'un ressort comme on l'expliquera plus loin en détail.

Dans tous les modes de réalisation, la partie 5 dite fixe de la charnière est réunie par l'intermédiaire d'une charnière 7 à une partie dite basculante 8 qui constitue la partie essentiellement protectrice, s'étendant parallèlement à la fraise en position d'utilisation, dans le sens de sa dimension longitudinale, comme on le voit sur les figures 2 et 6. La charnière 7 est transversale à cette dimension longitudinale.

La partie dite basculante 8 est munie d'une lèvre 9 (figure 4) s'étendant au-delà de la charnière 7 en direction de la partie dite fixe 5, dans un évidement correspondant 10 ménagé dans cette dernière, dans sa face tournée du côté de la fraise. On dispose ainsi d'une butée qui s'oppose au basculement de la partie basculante 8 en direction de la fraise. L'évidement 10 nécessite que la charnière 7 soit déportée dans le sens de l'épaisseur de la palette protectrice 4. On notera que cet évidement 10 n'est pas strictement nécessaire et qu'un autre type de butée pourrait être adopté. Il est avantageux de prévoir entre la partie dite fixe 5 et la partie dite basculante 8 un moyen de rappel élastique, qui pourrait être incorporé à la charnière 7 et qui est constitué dans cet exemple par un ressort plat 11 introduit dans un évidement 12 ménagé dans la partie dite basculante 8 et s'étendant devant la partie dite fixe 5, sur le côté de la palette 4 opposé à la fraise. Ainsi, la palette protectrice 4 ne peut basculer qu'en s'écartant de la fraise, comme indiqué par une flèche F sur la figure 2. Le moyen de rappel élastique 11 tend à la remettre à sa position où elle est parallèle à la fraise.

Selon l'invention, la palette protectrice 4, ou au moins sa partie basculante 8, a une face intérieure, celle qui est tournée vers la fraise en position d'utilisation, qui est réfléchissante, ou garnie au moins partiellement d'une couche réfléchissante 13. Ainsi, pendant l'opération de fraisage d'une dent l'utilisateur peut voir la zone fraisée réfléchie par cette face de la palette 4.

Dans la présente description, on doit comprendre que la partie 5 de la palette est appelée fixe d'une manière relative, par rapport à la partie 8 qui est basculante.

Dans le premier exemple de réalisation des figures 1 à 3, la palette protectrice 4 est orientable autour de l'axe 3A qui est parallèle à l'axe général de la fraise; cette orientation se fait par rotation de la tige 6 dans le logement 3. En outre, la tige 6 peut être retirée du logement 3 sous l'effet d'une force axiale suffisante. Dans cet exemple, la palette protectrice 4 peut être remplacée facilement. Elle peut être jetée après usage.

Dans le second exemple de réalisation des figures 6, 7, le corps 2' coiffe le sommet du chapeau 1' et il est réuni à ce dernier à l'aide d'un axe central 14. Ce dernier est, par exemple, serti sur la face extrême du chapeau 1'. Cet axe central 14 est confondu substantiellement avec l'axe général de la fraise en position d'utilisation. Dans cette même position, l'axe 3A' est substantiellement parallèle à l'axe général de la fraise. L'ensemble comprenant le corps mobile 2', le logement 3' et la palette 4 peut tourner autour de l'axe général de la fraise sur une étendue de 230° environ.

La tige 6 de la partie fixe 5 de la palette 4 est montée dans le logement 3' avec une possibilité de coulissement en sens axial. Par exemple un ressort de compression 15 est disposé dans le logement 3' pour s'appuyer d'une part contre le fond de ce logement 3', d'autre part contre une face transversale (non visible sur la figure 6) de la tige 6. Dans ce second exemple, la tige 6 peut être fixe ou être mobile en rotation dans le logement 3' autour de l'axe 3A'. La palette 4 est d'un usage permanent mais il est possible aussi de prévoir un démontage facile de la tige 6 hors du logement 3' et le remplacement de la palette 4 après chaque usage.

La figure 5 montre trois dents successives $D_1$, $D_2$, $D_3$. Pour fixer un appareil de prothèse à la dent intermédiaire $D_2$, on est conduit à la fraiser sur tout son périmètre pour en laisser subsister la partie centrale seulement. On pratique une opération de fraisage sur ses deux côtés entre un point A proche de la dent $D_1$ et un point B proche de la dent $D_3$, le long d'un trajet 16 représenté en trait interrompu sur un côté supposé être le côté lingual de la dent. Pendant le fraisage dans la partie médiane du trajet 16, la palette protectrice 4 est parallèle à la dent et empêche tout contact accidentel entre la langue et la dent. A mesure que la fraise se rapproche des dents voisines $D_1$, $D_3$, la palette 4 les rencontre et se soulève comme sur la figure 2, ce qui permet à la fraise de s'engager, sans interruption, entre les dents jusqu'aux points A et B.

0155206

# REVENDICATIONS

1. Dispositif de protection pour tête de fraisage dentaire ayant un moyen de montage (1, 1') et une palette protectrice (4) dans lequel la palette protectrice (4) comprend une partie (5) dite fixe et une partie (8) dite basculante, ces deux parties (5, 8) étant réunies par une charnière (7) disposée transversalement dans l'ensemble à la dimension longitudinale de la palette (4).

2. Dispositif selon la revendication 1 dans lequel la partie (5) dite fixe est réunie au moyen de montage (1,1') par l'intermédiaire d'un corps (2, 2') muni d'un logement (3, 3') ayant un axe général (3A, 3A') qui est substantiellement parallèle à l'axe général de la fraise en position d'utilisation, cependant que la partie (5) dite fixe de la palette (4) est munie d'une tige (6) apte à être logée dans ce logement (3, 3').

3. Dispositif selon la revendication 2 dans lequel le corps (2, 2') est fixe par rapport au moyen de montage (1, 1') et la tige (6) est enfoncée avec frottement dans le logement (3) et avec une possibilité de rotation autour de l'axe général (3A) de ce logement (3).

4. Dispositif selon la revendication 2 dans lequel le corps (2, 2') est monté déplaçable en rotation par rapport au moyen de montage (1') autour d'un axe géométrique qui est substantiellement confondu avec l'axe général de la fraise en position d'utilisation.

5. Dispositif selon la revendication 1 caractérisé en ce que la charnière (7) est associée à une butée d'arrêt (9, 10) qui s'oppose au basculement de la partie basculante (8) de la palette protectrice (4) en direction de la fraise en position de montage.

6. Dispositif selon la revendication 1 caractérisé en ce qu'un moyen élastique de rappel (11) tend à remettre la partie basculante (8) de la palette protectrice (4) à sa position initiale.

0155206

7. Dispositif selon la revendication 1 caractérisé en ce que l'une au moins des faces, de préférence la face tournée vers la fraise en position de montage, de la partie basculante (8) de la palette protectrice (4) a une surface réfléchissante (13).

8. Dispositif selon la revendication 2 caractérisé en ce que le moyen de montage (1) est un étrier à deux branches parallèles (1A, 1B) et le corps (2) est fixé à la face extérieure de l'une de ces deux branches.

9. Dispositif selon la revendication 2 caractérisé en ce que le moyen de montage (1) est un chapeau (1') ayant une ouverture latérale (1A') et une face extrême (1C') sur laquelle le corps (2') est monté tournant autour d'un axe central (14) qui est substantiellement confondu avec l'axe général de la fraise en position d'utilisation.

10. Dispositif selon la revendication 4 caractérisé en ce que la tige (6) de la partie (5) dite fixe de la palette (4) est montée déplaçable en sens axial contre la force d'un moyen élastique (15) à l'intérieur du logement (3').

0155206

Fig:1

Fig:7

Fig:2

Fig:3

Fig:6

Fig:4

Fig:5

## Office européen des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 671 269 (FRANCIS) | | A 61 C 1/16 |
| A | US-A-2 924 013 (WOWRA) | | |
| A | CH-A- 602 086 (BEAT-URS FREUDIGER) | | |

---

DOMAINES TECHNIQUES RECHERCHES (Int. Cl.4)

A 61 C

Le présent rapport de recherche a été établi pour toutes les revendications

| Lieu de la recherche | Date d'achèvement de la recherche | Examinateur |
|---|---|---|
| LA HAYE | 26-04-1985 | VANRUNXT J.M.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82